# EUROPEAN PATENT SPECIFICATION

(11) **EP 1 688 618 B1**
(45) Date of publication and mention of the grant of the patent: **23.05.2007**
(21) Application number: 06100781.1
(22) Date of filing: 24.01.2006
(51) Int. Cl.: F04B 27/10, F04B 39/06

(54) **Swash plate type compressor**
Taumelscheibenkompressor
Compresseur à plateau en biais

(30) Priority: 27.01.2005 JP 2005020290; 23.05.2005 JP 2005149679
(43) Date of publication of application: 09.08.2006
(73) Proprietor: KABUSHIKI KAISHA TOYOTA JIDOSHOKKI, Kariya-shi, Aichi-ken (JP)
(72) Inventor: Fukanuma, Tetsuhiko, Kariya-shi, Aichi (JP); Yokomachi, Naoya, Kariya-shi, Aichi (JP); Murase, Masakazu, Kariya-shi, Aichi (JP); Enami, Shingo, Kariya-shi, Aichi (JP); Kurita, Hajime, Kariya-shi, Aichi (JP); Katayama, Seiji, Kariya-shi, Aichi (JP)
(74) Representative: TBK-Patent

(56) References cited:
- EP-A- 1 447 562
- EP-A- 1 493 923
- PATENT ABSTRACTS OF JAPAN vol. 1997, no. 02, 28 February 1997 (1997-02-28) & JP 08 284816 A (TOYOTA AUTOM LOOM WORKS LTD), 29 October 1996 (1996-10-29)

## Description

### TECHNICAL FIELD

The present invention relates to a swash plate type compressor according to the preamble of claim 1 and more particularly to a structure for cooling heat-generating sliding portions of the swash plate type compressor.

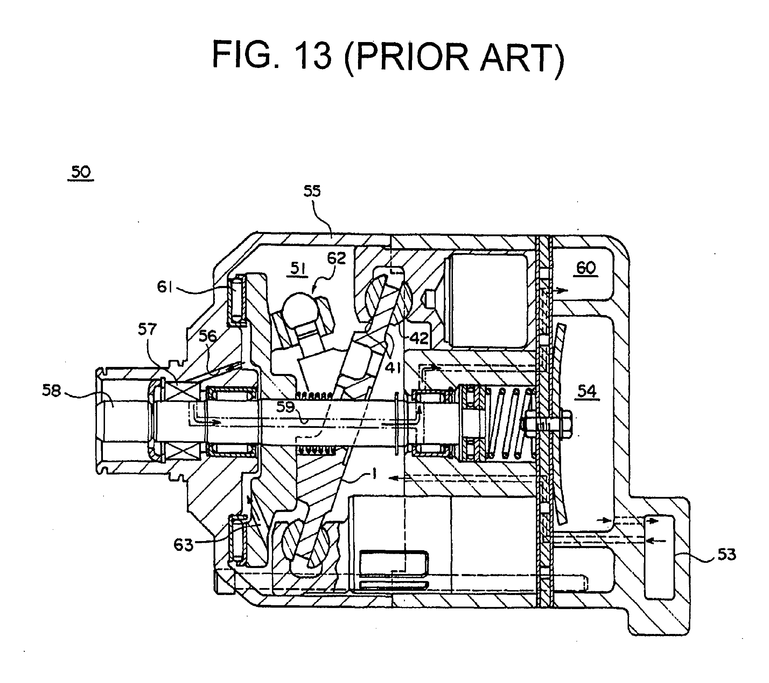

A conventional swash plate type compressor is disclosed, for example, in the JP 8-284816 A. FIG. 13 shows the structure of such swash plate type compressor. In the swash plate type compressor 50 of FIG. 13, pressure in the crank chamber 51 (crank chamber pressure Pc) is controlled for changing the inclination angle of the swash plate 1, thereby adjusting the displacement of the compressor 50.

The front housing 55 of the compressor 50 has a passage 56 formed therein. A drive shaft 58 has a communication passage 59 formed therein. The crank chamber 51 is sealed by a lip seal 57 which is provided between the front housing 55 and the outer peripheral surface of the drive shaft 58.

To control the crank chamber pressure Pc, part of refrigerant in the discharge chamber 54 is introduced into the crank chamber 51 with its flow rate being adjusted by the control valve 53. Refrigerant introduced into the crank chamber 51 is used to create the crank chamber pressure Pc and then flows through the passage 56 in the front housing 55, the communication passage 59 in the drive shaft 58 and other passages formed in the compressor 50 finally into the suction chamber 60, as indicated by arrows.

The refrigerant contains lubricating oil which is supplied into the crank chamber 51 and then guided through the oil supply passage 63 and the passage 56 to the lip seal 57 together with refrigerant for lubricating the lip seal 57. The lubricating oil is finally drawn to the suction chamber 60 through the communication passage 59.

However, refrigerant introduced into the crank chamber 51 increases in temperature while it flows in the crank chamber 51, which impedes cooling of the heat-generating sliding portions of the compressor 50, such as the lip seal 57, a thrust bearing 61 and a link 62, requiring cooling during operation of the compressor 50.

The present invention is directed to providing a swash plate type compressor that can sufficiently cool the heat-generating sliding portions of the compressor.

### SUMMARY

In accordance with the present invention, a swash plate type compressor has a housing, a drive shaft, a lug plate, a swash plate, a piston and a heat-generating sliding portion. The housing has a cylinder bore, a suction pressure region, a discharge pressure region and a crank chamber. The drive shaft is rotatably supported by the housing. The lug plate is secured to the drive shaft. The swash plate is tiltably coupled to the lug plate. The piston is coupled to the swash plate and reciprocally accommodated in the cylinder bore. Refrigerant in the discharge pressure region is introduced into the crank chamber through a supply passage while the refrigerant in the crank chamber is drawn out to the suction pressure region through a bleed passage for controlling pressure in the crank chamber, whereby inclination angle of the swash plate is changed. The heat-generating sliding portion is provided in the crank chamber. The supply passage includes a communication port that communicates with the crank chamber and a first throttle portion for throttling the refrigerant. At least parts of the supply passage and the bleed passage are formed in the drive shaft. A part of the bleed passage formed in the drive shaft is located between a part of the supply passage formed in the drive shaft and an outer peripheral surface of the drive shaft.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a cross-sectional view of a swash plate type compressor according to a first preferred embodiment of the present invention;
FIG. 2 is a cross-sectional view of a drive shaft of the swash plate type compressor according to the first preferred embodiment of the present invention;
FIG. 3 is a cross-sectional view of a drive shaft of the swash plate type compressor according to an alternative embodiment to the first preferred embodiment of the present invention;
FIG. 4 is a cross-sectional view of a drive shaft of the swash plate type compressor according to an alternative embodiment to the first preferred embodiment of the present invention;
FIG. 5 is a cross-sectional view of a drive shaft of the swash plate type compressor according to an alternative embodiment to the first preferred embodiment of the present invention;
FIG. 6 is a cross-sectional view of a drive shaft of the swash plate type compressor according to an alternative embodiment to the first preferred embodiment of the present invention;
FIG. 7 is a partially cross-sectional view of a swash plate type compressor according to a second preferred embodiment of the present invention;
FIG. 8 is a partially cross-sectional view of a swash plate type compressor according to a third preferred embodiment of the present invention;
FIG. 9 is a partially cross-sectional view of a swash plate type compressor according to a fourth preferred embodiment of the present invention;
FIG. 10 is a partially cross-sectional view of a swash plate type compressor according to a fifth preferred embodiment of the present invention;
FIG. 11 is a perspective view of a second shaft of the swash plate type compressor according to the fifth preferred embodiment of the present invention;
FIG. 12 is a partially cross-sectional view of a swash plate type compressor according to a sixth preferred embodiment of the present invention; and
FIG. 13 is a cross-sectional view of a swash plate type compressor according to a prior art.

### DETAILED DESCRIPTION OF THE PREFERRED EMBODIMENTS

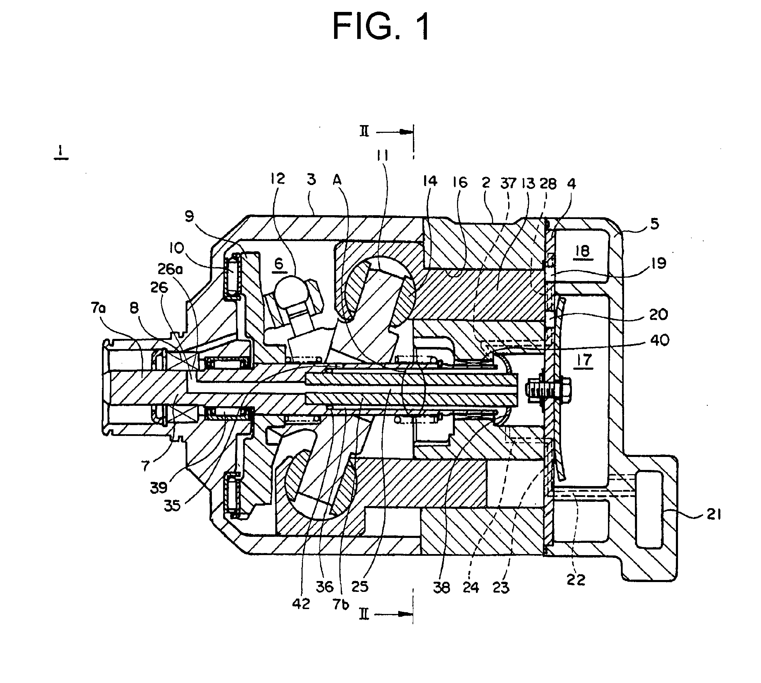

The following will describe a first preferred embodiment of a swash plate type compressor 1 with reference to FIGS. 1 through 6.

Referring to FIG. 1, the compressor 1 includes a cylinder block 2. It is noted that the left side and the right side of the compressor 1 as seen in FIG. 1 correspond to the front side and the rear side of the compressor 1, respectively. A front housing 3 is connected to the front end of the cylinder block 2. A valve port assembly 4 is connected to the rear end of the cylinder block 2. Furthermore, a rear housing 5 is connected to the rear end of the valve port assembly 4. The cylinder block 2 and the front housing 3 cooperate to form a crank chamber 6.

In the crank chamber 6, a drive shaft 7 is rotatably supported by the front housing 3 and the cylinder block 2. The drive shaft 7 includes a cylindrical hollow first shaft portion 7a having an opening at one end thereof and a cylindrical hollow second shaft portion 7b having openings at the opposite ends thereof and press-fitted in the opening of the first shaft portion 7a. An O-ring 42 is held between the inner peripheral surface of the first shaft portion 7a and the outer peripheral surface of the second shaft portion 7b adjacent to the front end of the second shaft portion 7b. The first shaft portion 7a is supported at the front and rear ends thereof by radial bearings 39 and 40, respectively.

A lip seal 8, which is one of the heat-generating sliding portions of the compressor 1, is provided between the outer peripheral surface of the front end portion of the drive shaft 7 and the front housing 3 for sealing of the crank chamber 6. In the crank chamber 6, a lug plate 9 is secured to the drive shaft 7 for rotation therewith. A thrust bearing 10 is provided between the lug plate 9 and the inner wall surface of the front housing 3.

A substantially disc-shaped swash plate 11 is tiltably fitted around the drive shaft 7 in the crank chamber 6 and tiltably coupled to the lug plate 9 through a link 12. A plurality of pistons 13 is arranged around the drive shaft 7 and coupled to the outer periphery of the swash plate 11 through a pair of shoes 14. Each of the pistons 13 is reciprocally accommodated in an associated cylinder bore 16, which is formed in the cylinder block 2. As the swash plate 11 is rotated, the pistons 13 are reciprocated in their associated cylinder bores 16.

A discharge chamber 17, which is a part of the discharge pressure region of the compressor 1, is formed at the center of the rear housing 5 and connected to an external refrigerant circuit through an outlet (not shown). On the other hand, a suction chamber 18, which is a part of the suction pressure region of the compressor 1, is formed around the discharge chamber 17 in the rear housing 5 and connected to the external refrigerant circuit through an inlet (not shown).

The valve port assembly 4 has suction ports 19, suction valves (not shown), discharge ports 20 and discharge valves (not shown). Each of the cylinder bores 16 is communicable with the suction chamber 18 through the respective suction port 19 and with the discharge chamber 17 through the respective discharge port 20. A retainer is provided on the rear side of the discharge ports 20.

A control valve 21 is provided in the rear housing 5 for adjusting the flow rate of refrigerant introduced into the crank chamber 6 thereby to control pressure in the crank chamber (crank chamber pressure Pc). The control valve 21 functions as a first throttle portion. The control valve 21 is in communication with the discharge chamber 17 through a passage on one hand and with one end of a passage 22 formed in the rear housing 5 on the other. The passage 22 extends from the control valve 21 toward the valve port assembly 4 and communicates with one end of a passage 23 formed in the valve port assembly 4. The other end of the passage 23 is in communication with one end of a passage 24 formed in the cylinder block 2 and the other end of the passage 24 is in communication with one end of a passage 25 formed axially in the drive shaft 7. The other end of the passage 25 is in communication with a passage 26 that communicates with the crank chamber 6. The passage 26 has a communication port 26a which is radially opened to the crank chamber 6 and in communication with the lip seal 8. The control valve 21 and the passages 22, 23, 24, 25, 26 cooperate to form a supply passage for supplying refrigerant in the discharge pressure region into the crank chamber 6.

The drive shaft 7 has a passage 35 formed between the swash plate 11 and the lug plate 9 and having a communication port for drawing refrigerant and lubricating oil from the crank chamber 6 toward the suction chamber 18. The passage 35 is in communication with one end of a passage 36, the other end of which is in communication with one end of a passage 37 formed in the cylinder block 2. It is noted that a lip seal 38 is provided between the passage 36 and the passage 24. The passage 37 is in communication with one end of a passage 28 which is formed in the valve port assembly 4 and the other end of which communicates with the suction chamber 18. The passages 35, 36, 37, 28 cooperate to form a bleed passage for drawing refrigerant in the crank chamber 6 into the suction pressure region. The lip seal 38 is located at the rear end of the drive shaft 7 for sealing the bleed passage from the supply passage, that is, for sealing the inside of the second shaft portion 7b from the outside thereof. The lip seal 38 defines the supply passage in the drive shaft 7 together with the inner peripheral surface of the second shaft portion 7b and also defines the bleed passage in the drive shaft 7 together with the inner peripheral surface of the first shaft portion 7a and the outer peripheral surface of the second shaft portion 7b. It is noted that the supply passage and the bleed passage are so formed that the cross-sectional areas at any portion thereof are larger than that of the throttle of the control valve 21, so that the flow of refrigerant in such passages is not prevented.

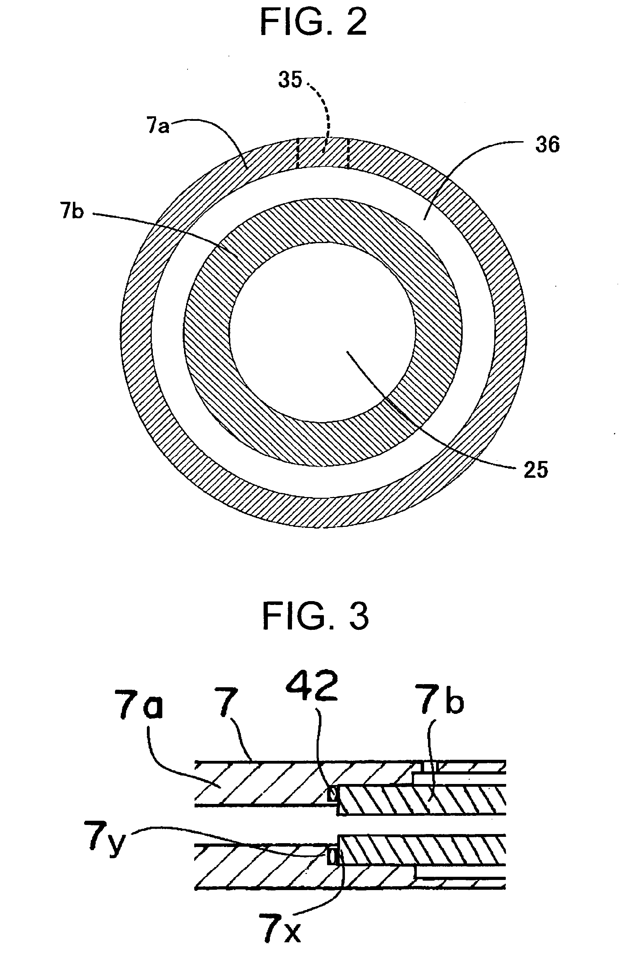

FIG. 2 is an enlarged cross-sectional view of the drive shaft 7 that is taken along the line II-II of FIG. 1, that is, an enlarged view of the portion A of FIG. 1. As shown in FIG. 2, the passage 25 which is a part of the supply passage and the passage 36 which is a part of the bleed passage are formed coaxially in the drive shaft 7 as seen in the transverse cross-section across the axial direction thereof. To be more specific, the passage 36 is formed between the passage 25 in the second shaft portion 7b and the outer peripheral surface of the first shaft portion 7a, which is the outer peripheral surface of the drive shaft 7.

The following will describe the operation of the compressor 1 according to the first preferred embodiment.

As the drive shaft 7 is driven by a drive source (not shown), the swash plate 11 rotates, with the result that each of the pistons 13 reciprocates in the associated cylinder bore 16. Refrigerant in the external refrigerant circuit is introduced into the suction chamber 18 and then drawn through the respective suction ports 19 into the cylinder bores 16, in which the refrigerant is compressed by the pistons 13. The compressed refrigerant is forced into the discharge chamber 17 through the discharge ports 20 and then discharged out thereof into the external refrigerant circuit.

Part of refrigerant in the discharge chamber 17 is introduced into the crank chamber 6 for controlling the inclination angle of the swash plate 11. The flow rate of refrigerant introduced into the crank chamber 6 is controlled by adjusting the degree of opening of the control valve 21. When refrigerant passes through the control valve 21, the valve portion of the control valve 21 throttles or regulates the flow of refrigerant thereby to reduce its pressure and hence its temperature. For example, refrigerant in the discharge pressure region subjected to a high pressure and has a temperature of about 150 degrees C. The refrigerant is lowered in pressure by passing through the control valve 21 and its temperature is dropped to approximately 100 degrees C. Refrigerant that has thus decreased in temperature passes through the passages 22, 23, 24, 25, 26 in this order and is introduced into the crank chamber 6 through the communication port 26a. Since refrigerant that has decreased in temperature and flows past the communication port 26a directly blows onto the lip seal 8 just after being introduced into the crank chamber 6, the lip seal 8 which generates heat during operation of the compressor 1 is cooled by refrigerant.

Refrigerant thus introduced into the crank chamber 6 serves to adjust the crank chamber pressure Pc in accordance with the degree of opening of the control valve 21, and the inclination angle of the swash plate 11 is controlled by the pressure difference between the crank pressure chamber Pc and the pressure in the cylinder bores 16, thus controlling the displacement of the compressor 1. That is, the inclination angle of the swash plate 11 may be changed by adjusting the crank chamber pressure Pc in the crank chamber 6. Refrigerant in the crank chamber 6 is drawn out to the suction chamber 18 through the passages 35, 36, 37, 28 in this order.

It is noted that lubricating oil contained in refrigerant in the crank chamber 6 is not uniformly distributed, but the oil content is less in the region between the swash plate 11 and the lug plate 9. One reason is that refrigerant containing lubricating oil is compelled away from the drive shaft 7 between the swash plate 11 and the lug plate 9 due to the rotating action and centrifugal force of the swash plate 11. Another reason is that refrigerant compelled away from the drive shaft 7 due to the operation of the swash plate 11 or other reasons attaches on the inner wall of the front housing 3 or other parts, and some lubricating oil may adhere thereto. Thus, there is less lubricating oil between the swash plate 11 and the lug plate 9. On the contrary, more lubricating oil is present in the parts other than between the swash plate 11 and the lug plate 9, namely, near the inner wall surface of the front housing 3 and between the swash plate 11 and the cylinder block 2.

Refrigerant that flows through the bleed passage, particularly through the passage 35, after cooling the lip seal 8, increases in temperature to a level that is still lower than the temperature of peripheral parts of the drive shaft 7, particularly the outer peripheral portion of the drive shaft 7.

Thus, the refrigerant which is decreased in temperature due to throttling by the valve portion of the control valve 21 when refrigerant is introduced into the crank chamber 6 is directly blown onto the lip seal 8. Therefore, the lip seal 8 which is heated during operation of the compressor 1 is cooled down by the refrigerant.

This cooling effect is synergistically improved by forming the passages 25, 36 in the drive shaft 7 with the passage 36 provided between the passage 25 in the drive shaft 7 and the outer peripheral surface of the first shaft portion 7a. That is, the passage 36, which is a part of the bleed passage, is formed to surround the passage 25, so that the passage 36 and refrigerant flowing therein prevent the heat on the outer peripheral side of the drive shaft 7 from being conducted to the passage 25. Therefore, the temperature of refrigerant in the passage 25 is kept at a lower level. Thus, refrigerant with lower temperature is directly blown onto the lip seal 8, so that the lip seal 8 is further effectively cooled.

Additionally, the bleed passage having a communication port 35 for drawing therethrough refrigerant and lubricating oil from the crank chamber 6 into the suction chamber 18 is provided at a position where the refrigerant contains less lubricating oil, rather than at a position near the lip seal 8 where the refrigerant contains more lubricating oil. Therefore, the amount of lubricating oil discharged out of the compressor 1 is reduced and a relatively large amount of lubricating oil is accumulated in the crank chamber 6, so that the compressor 1 is desirably operated during its off state where substantially no refrigerant is introduced, compressed and discharged, but the swash plate 11 is being rotated. Furthermore, the drive shaft 7 which has two passages in the form of cavities can be made advantageously light in weight.

In the first preferred embodiment, the first shaft portion 7a and the second shaft portion 7b are made of metal. In an alternative embodiment, the second shaft portion 7b is made of heat insulation material such as resin. In another alternative embodiment, the drive shaft 7 is provided with heat insulation treatment, for example, by coating the first shaft portion 7a and/or the second shaft portion 7b with heat insulation material or by fitting a hollow cylindrical heat insulation member on the inner or outer periphery of at least one of the first and second shaft portions 7a, 7b as a part of the drive shaft 7. The second shaft portion 7b, whose rigidity may be lower than that of the first shaft portion 7a, may be made of a heat insulation material with a lower rigidity.

Thus making part of the drive shaft 7 using a heat insulation material, the conduction of heat generated on the outer periphery of the drive shaft 7 to the passage 25 is prevented more effectively than without using the heat insulation material for the drive shaft 7. Thus, the cooling of the lip seal 8 is further improved.

The position where the O-ring 42 is provided is not limited to a position between the inner peripheral surface of the first shaft portion 7a and the outer peripheral surface of the second shaft portion 7b. For example, the O-ring 42 may be provided between the front end 7x of the second shaft portion 7b and a step 7y which is formed on the inner peripheral surface of the first shaft portion 7a that is engaged with the front end 7x, as shown in FIG. 3.

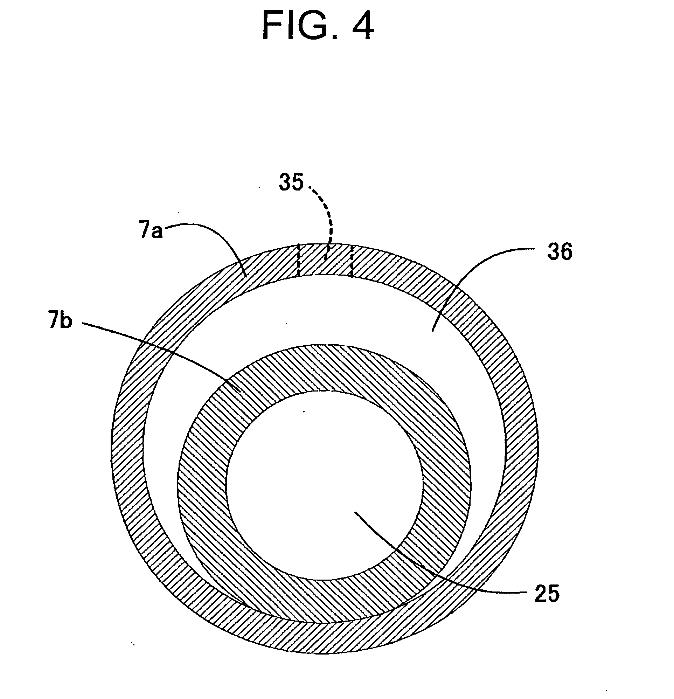

The shape of cross-section of the drive shaft 7 is not limited to that of FIG. 1, but the drive shaft 7 may be designed such that the passage 36 is provided between the passage 25 and the outer peripheral surface of the drive shaft 7 and that the passage 36 and the passage 25 are separated from each other, as exemplified in FIGS. 4 through 6.

In FIG. 4, the second shaft portion 7b is fitted to the first shaft portion 7a so that the axis of the second shaft portion 7b is offset from the axis of the first shaft portion 7a. A part of the inner peripheral surface of the first shaft portion 7a is in contact with a part of the outer peripheral surface of the second shaft portion 7b. In such arrangement of the shaft portions 7a, 7b, the second shaft portion 7b is easily assembled and supported.

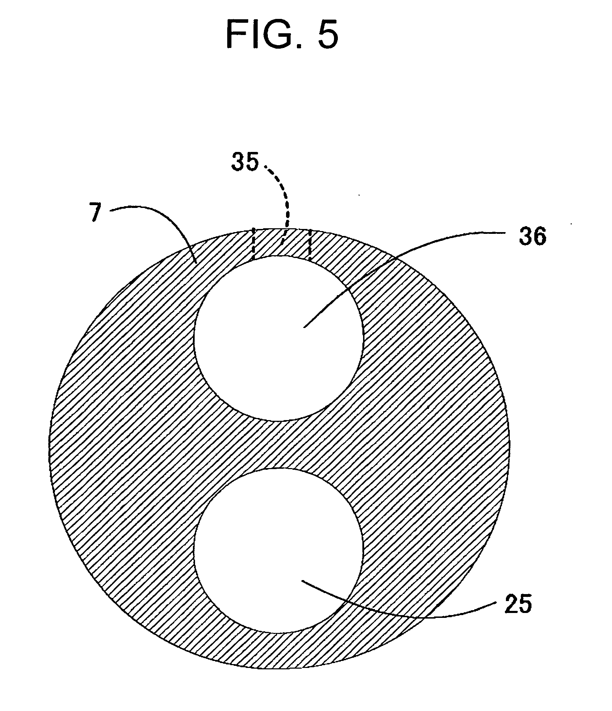

In FIG. 5, the drive shaft 7 is formed of a single member having the passage 25 and the passage 36 formed side by side. Thus, the number of components of the compressor 1 is reduced. Each of the passage 25 and the passage 36 of FIG. 5 is circular in cross-section but it may have any other shape than circle such as an elliptical shape, an oblong shape, a shape including a circular arc and a straight line, and a polygonal shape.

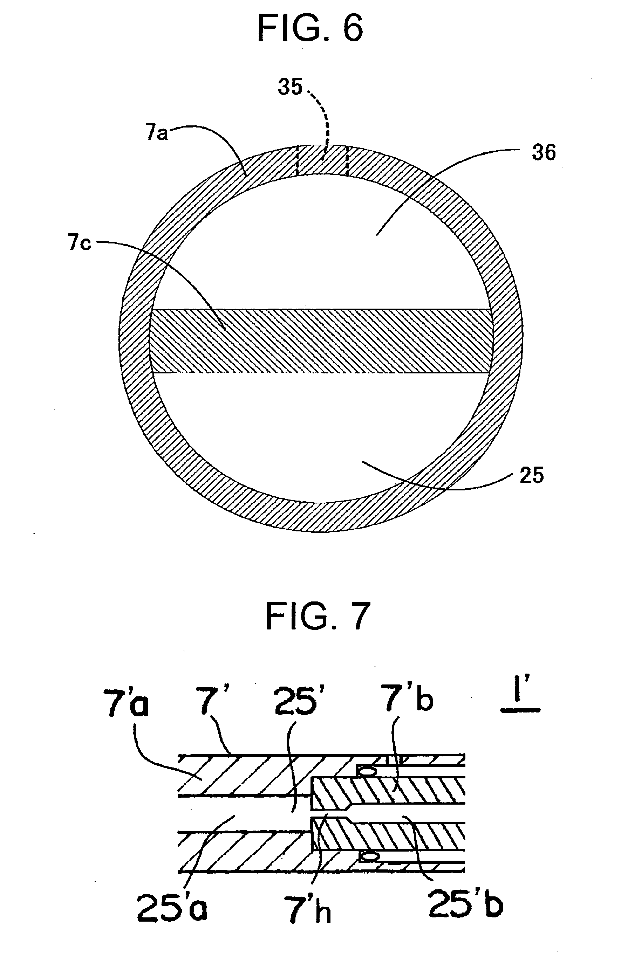

In FIG. 6, the interior of the first shaft portion 7a is divided by a partition member 7c into two passages 25, 36. The partition member 7c has planar surfaces on the both sides, each constituting a part of the respective passages 25, 36. The planar surface may be replaced by a curved surface. Thus, the drive shaft 7 may be constructed simple by using the partition member 7c having a simple shape instead of the cylindrical second shaft portion 7b. In this case, the passage 36 is provided between the passage 25 and the outer peripheral surface of the first shaft portion 7a.

Furthermore, the position of the passage 35 in the drive shaft 7 is not limited to that between the swash plate 11 and the lug plate 9, but the passage 35 may be located closer to the lip seal 8 or near the front end of the crank chamber 6, that is, near the position where the drive shaft 7 contacts with the lug plate 9.

In such a case, the passage 36 becomes longer and, accordingly, the second shaft portion 7b is formed longer. Thus, the portion of the passage 25 where refrigerant flowing therein is thermally insulated by the passage 36 becomes longer, so that the heat on the outer peripheral side of the drive shaft 7 is effectively insulated and the lip seal 8 is further effectively cooled.

The target component of the compressor 1 to be cooled by refrigerant is the lip seal 8 in this embodiment of FIG. 1, but it is not limited to the lip seal 8. If the communication port 26a of the supply passage to the crank chamber 6 is located near the target component for cooling, other heat generating components such as the radial bearing 39, the thrust bearing 10 and the link 12.

The O-ring 42 which is held between the inner peripheral surface of the first shaft portion 7a and the outer peripheral surface of the second shaft portion 7b near the front end of the second shaft portion 7b may be omitted. That is, the inner peripheral surface of the first shaft portion 7a closely contacts with the outer peripheral surface of the second shaft portion 7b by press-fitting, thereby having a seal structure.

The following will describe a second preferred embodiment of a swash plate type compressor 1' according to the present invention with reference to FIG. 7. The second preferred embodiment differs from the first preferred embodiment in that an additional second throttle portion is provided in the supply passage between the control valve 21 as a first throttle portion and the communication port 26a. For example, the drive shaft 7' including the first shaft portion 7'a and the second shaft portion 7'b are modified as shown in FIG. 7. Those parts and elements of the compressor 1' which are not shown in FIG. 7 are the same as the counterparts of the first preferred embodiment.

As shown in FIG. 7, the second shaft portion 7'b has at the front end thereof a second throttle portion 7'h formed integrally therewith. The passage 25' includes a first passage part 25'a defined by the inner peripheral surface of the first shaft portion 7'a and a second passage part 25'b defined by the inner peripheral surface of the second shaft portion 7'b. The second passage part 25'b has the second throttle portion 7'h formed by reducing the inside diameter of the front end portion of the second shaft portion 7'b.

Refrigerant passing through the passages 22, 23, 24 in FIG. 1 and the second passage part 25'b of the passage 25' in FIG. 7 is heated by cooling the surroundings. The second throttle portion 7'h functions to decompress the heated refrigerant thereby to reduce its temperature.

According to the compressor 1 of the second preferred embodiment having the second throttle portion 7'h in the supply passage between the control valve 21 and the communication port 26a, the temperature of refrigerant that reaches the communication port 26a is reduced by the second throttle portion 7'h, with the result that the lip seal 8 is effectively cooled.

The position where the second throttle portion 7'h is provided is not limited to the front end of the second shaft portion 7'b, but the second throttle portion may be formed as a part of the supply passage in the drive shaft 7 in an alternative embodiment to the second preferred embodiment. For example, the second throttle portion may be provided at the rear end or halfway of the second passage part 25'b. Alternatively, it may be provided at the front end, rear end or halfway of the first passage part 25'a. Particularly, providing the second throttle portion near the front end of the first passage part 25'a, that is, near the passage 26 of FIG. 1, the distance of the path between the second throttle portion and the lip seal 8 is shortened. Thus, refrigerant cooled at the second throttle portion is prevented from being heated, so that the lip seal 8 is further efficiently cooled.

The second throttle portion may be formed separately from the second shaft portion 7'b unlike the one 7'h which is formed integrally with the second shaft portion 7'b as shown in FIG. 7. The second throttle portion may be formed integrally with the first shaft portion 7'a or may be formed separately therefrom. Providing the second throttle portion separately from the first or second shaft portions 7'a or 7'b, these shaft portions 7'a, 7'b may be made simple and hence easy to manufacture.

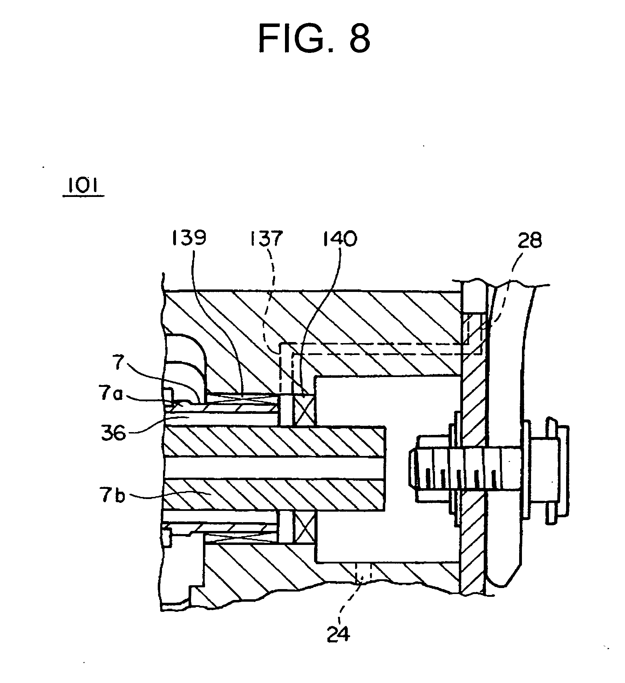

The following will describe a third preferred embodiment of a swash plate type compressor 101 according to the present invention with reference to FIG. 8.

The third preferred embodiment differs from the first preferred embodiment in that the structure around the rear end of the drive shaft 7 is modified as shown in FIG. 8. Referring to FIG. 8, the first shaft portion 7a is supported by a first bearing 139 or a plain bearing, and the second shaft portion 7b is supported by a second bearing 140 which is also a plain bearing.

In the third preferred embodiment, the lip seal 38 of the first preferred embodiment is not provided. Instead, the second bearing 140 is provided for sealing the passage 24 which is a part of the supply passage, from the passage 36 which is a part of the bleed passage. It is noted that the pressure differential between the supply passage and the bleed passage is small enough for the plain bearing 140 to seal the supply passage from the bleed passage.

According to the third preferred embodiment, the lip seal 38 is replaced by the plain bearing 140 having a higher durability, with the result that durability of the compressor 101 is improved.

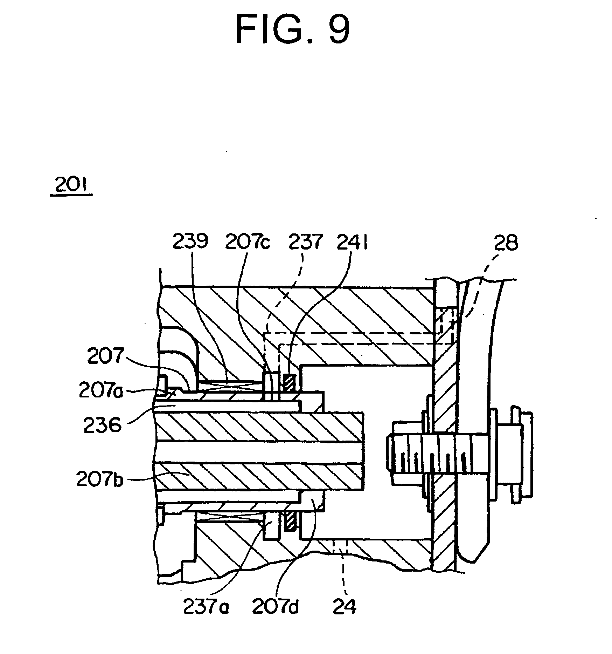

The following will describe a fourth preferred embodiment of a swash plate type compressor 201 according to the present invention with reference to FIG. 9. The fourth preferred embodiment differs from the first preferred embodiment in that the structure around the rear end of the drive shaft 7 is modified into a drive shaft 207 as shown in FIG. 9. Though not shown in FIG. 9, the general structure of the drive shaft 207 is substantially the same as the drive shaft 7 of FIG. 1.

Referring to FIG. 9, the first shaft portion 207a is supported by a first bearing 239 or a plain bearing. An O-ring 241 is provided for sealing the supply passage from the bleed passage. The first shaft portion 207a has at its rear end a small diameter portion 207d whose inner diameter is reduced. The small diameter portion 207d is fitted around a second shaft portion 207b. Furthermore, the first shaft portion 207a has a communication hole 207c that connects a passage 236 to a passage 237. A communication groove 237a is formed in the passage 237 adjacent to the communication hole 207c, surrounding the first shaft portion 207a so that the communication groove 237a is in constant communication with the passage 236 irrespective of the position of the communication hole 207c.

According to the fourth preferred embodiment wherein the drive shaft 207 is so formed that the small diameter portion 207d of the first shaft portion 207a is directly fitted around the rear end of the second shaft portion 207b, the strength of the drive shaft 207 is improved.

An O-ring may be provided at a position where the small diameter portion 207d of the first shaft portion 207a is fitted around the second shaft portion 207b for ensuring the seal between the supply passage and the bleed passage.

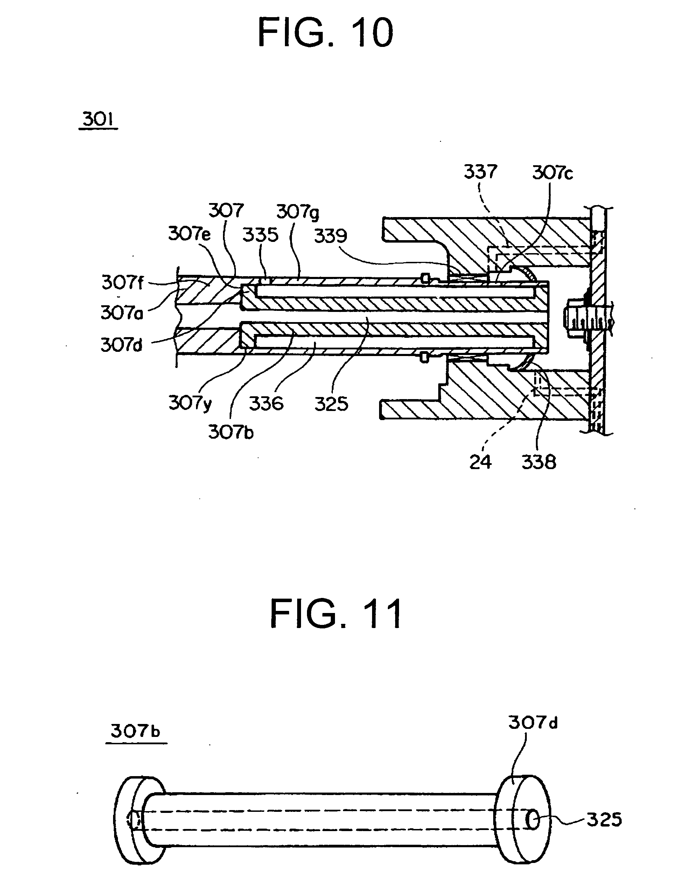

The following will describe a fifth preferred embodiment of a swash plate type compressor 301 according to the present invention with reference to FIG. 10. The fifth preferred embodiment differs from the first preferred embodiment in that the structure of or around the drive shaft 7 is modified as shown in FIG. 10. Though not shown in FIG. 10, the general structure of the drive shaft 307 is substantially the same as the drive shaft 7 of FIG. 1.

The drive shaft 307 includes a first shaft portion 307a and a second shaft portion 307b. The first shaft portion 307a has a small diameter portion 307f whose inner diameter is small and a large diameter portion 307g that has an inside diameter larger than the small diameter portion 307f. The second shaft portion 307b is press-fitted into the large diameter portion 307g of the first shaft portion 307a.

Referring to FIG. 11 showing a perspective view of the second shaft portion 307b, it has a hollow cylinder and a flange 307d formed at the opposite ends of the cylinder and extending radially outside. The hollow portion provides a passage 325 in the compressor 301 which communicates with the passage 24. The flange 307d has an outside diameter that is substantially equal to the inside diameter of the large diameter portion 307g of the first shaft portion 307a, so that the passage 325 is so sealed with the flange 307d fitted in the large diameter portion 307g. Press-fitting the second shaft portion 307b into the first shaft portion 307a, the flange 307d on the front side of the second shaft portion 307b is engaged with a step 307e formed on the inner peripheral surface of the first shaft portion 307a. The inner peripheral surface of the first shaft portion 307a and the flange 307d cooperate to form a seal portion 307y.

A passage 335 is formed in the first shaft portion 307a at a position between the swash plate 11 and the lug plate 9 for drawing refrigerant from the crank chamber 9 into the suction chamber 18. The passage 335 is in communication with one end of a passage 336 which is formed between the inner peripheral surface of the large diameter portion 307g of the first shaft portion 307a and the outer peripheral surface of the second shaft portion 307b. The other end of the passage 336 is in communication with one end of a passage 337. The first shaft portion 307a has a communication hole 307c that connects the passage 336 to the passage 337. A lip seal 338 is provided around the first shaft portion 307a at the rear end thereof for sealing the supply passage from the bleed passage.

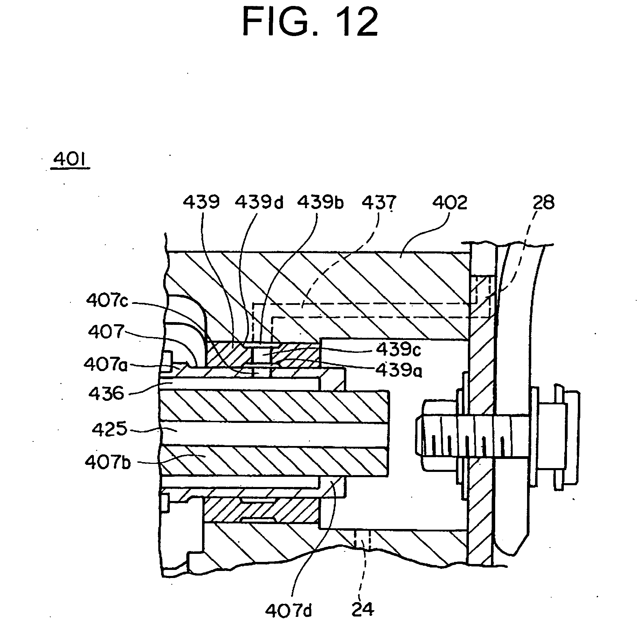

The following will describe a sixth preferred embodiment of a swash plate type compressor 401 according to the present invention with reference to FIG. 12. The sixth preferred embodiment differs from the fourth preferred embodiment in that the structure of or around the drive shaft 207 is modified as shown in FIG. 12. Though not shown in FIG. 12, the general structure of the drive shaft 407 is substantially the same as the drive shaft 7 of FIG. 1.

Referring to FIG. 12, the rear end of the first shaft portion 407a of the drive shaft 407 is supported by a plain bearing 439. The first shaft portion 407a has at its rear end a small diameter portion 407d whose inner diameter is smaller. The small diameter portion 407d of the first shaft portion 407a is fitted around the second shaft portion 407b, thereby sealing a passage 436 in the drive shaft 407 from the passages 24, 425. Furthermore, the first shaft portion 407a has a communication hole 407c that connects the passage 436 to the outside of the first shaft portion 407a. The plain bearing 439 is provided in contact with the terminal end of the passage 436, that is, over the communication hole 407c through which the passage 436 is in communication with the outside of the first shaft portion 407a.

The plain bearing 439 has an inner annular groove 439a and an outer annular groove 439b on the inner peripheral surface and the outer peripheral surface thereof, respectively. The inner annular groove 439a and the outer annular groove 439b are located, for example, at the axial center of the plain bearing 439. Each of the inner annular groove 439a and the outer annular groove 439b has tapered surfaces 439d on its front and rear ends, respectively. The inner annular groove 439a is in communication with the outer annular groove 439b through a bearing communication hole 439c that extends through the plain bearing 439.

The plain bearing 439 is fixed to the cylinder block 402, so that relative position between the communication hole 407c and the bearing communication hole 439c varies with rotation of the drive shaft 407, but the inner annular groove 439a is maintained in constant communication with the communication hole 407c and the passage 437, irrespective of the position of the bearing communication hole 439c. Therefore, the passage 436 is constantly in communication with the passage 437.

The passage 35 (shown in FIG. 1), the passage 436, the communication hole 407c, the inner annular groove 439a, the bearing communication hole 439c, the outer annular groove 439b, the passage 437 and the passage 28 in FIG. 12 cooperate to form the bleed passage for drawing therethrough refrigerant in the crank chamber 6 into the suction pressure region.

The pressure differential between the passages 24, 425 that are part of the supply passage and the inner annular groove 439a, the outer annular groove 439b and the bearing communication hole 439c that are part of the bleed passage is small enough for the plain bearing 439 to seal successfully the supply passage from the bleed passage.

According to the sixth preferred embodiment wherein the plain bearing 439 which is provided at the rear end of the drive shaft 407 functions not only as a support for the drive shaft 407 but also as a seal for the supply passage and the bleed passage, there is no need for providing an additional member such as partition wall for sealing the supply passage from the bleed passage and, therefore, the structure of the compressor becomes simple. At the rear end of the drive shaft 407, the bleed passage is not formed outside or at the end of the plain bearing 439 supporting the drive shaft 407, but formed inside thereof (or halfway the plain bearing 439 as seen in the axial direction thereof). Therefore, lubricating oil contained in refrigerant that flows through the bleed passage flows through the entire plain bearing 439, thereby further efficiently lubricating the plain bearing 439.

In the sixth preferred embodiment, the inner annular groove 439a, the outer annular groove 439b and the bearing communication hole 439c are provided at the axial center of the plain bearing 439. It is noted, however, that the position of the inner and outer annular grooves 439a, 439b may be changed to halfway the plain bearing 439 as viewed in its axial direction. The position may be changed so as to achieve efficient sealing effect, for example, in view of the above pressure differential.

Additionally, the inner annular groove 439a may be formed not on the inner peripheral surface of the plain bearing 439 but on the outer peripheral surface of the first shaft portion 407a. Similarly, the annular groove 439b does not have to be formed necessarily on the outer peripheral surface of the plain bearing 439, but it may be formed in the inner peripheral surface of the cylinder block 402. By so providing the annular grooves 439a, 439b, the plain bearing 439 is improved in strength.

Therefore, the present examples and embodiments are to be considered as illustrative and not restrictive, and the invention is not to be limited to the details given herein but may be modified within the scope of the appended claims. In a swash plate type compressor, refrigerant in a discharge pressure region is introduced into a crank chamber through a supply passage while the refrigerant in the crank chamber is drawn out to a suction pressure region through a bleed passage for controlling pressure in the crank chamber, whereby inclination angle of a swash plate is changed. A heat-generating sliding portion is provided in the crank chamber. The supply passage includes a communication port that communicates with the crank chamber and a first throttle portion for throttling the refrigerant. At least parts of the supply passage and the bleed passage are formed in a drive shaft. A part of the bleed passage formed in the drive shaft is located between a part of the supply passage formed in the drive shaft and an outer peripheral surface of the drive shaft.

## Claims

1. A swash plate type compressor (1) comprising
a housing having a cylinder bore (16), a suction pressure region, a discharge pressure region and a crank chamber (6),
a drive shaft (7; 207; 307) rotatably supported by the housing,
a lug plate (9) secured to the drive shaft (7; 207; 307),
a swash plate (11) tiltably coupled to the lug plate (9), and
a piston (13) coupled to the swash plate (11) and reciprocally accommodated in the cylinder bore (16), wherein refrigerant in the discharge pressure region is introduced into the crank chamber (6) through a supply passage while the refrigerant in the crank chamber (6) is drawn out to the suction pressure region through a bleed passage for controlling pressure in the crank chamber (6), whereby inclination angle of the swash plate (11) is changed,
a heat-generating sliding portion (8) provided in the crank chamber (6), wherein
the supply passage includes a communication port (26a) that communicates with the crank chamber (6) and a first throttle portion for throttling the refrigerant,
**characterized in that**
at least parts of the supply passage (25) and the bleed passage (36) are formed in the drive shaft (7; 207; 307), and **in that**
a part of the bleed passage (36; 236; 336) formed in the drive shaft (7; 207; 307) is located between a part of the supply passage (25; 325) formed in the drive shaft (7; 207; 307) and an outer peripheral surface of the drive shaft (7; 207; 307).

2. The swash plate type compressor (1) according to claim 1, wherein the bleed passage includes a communication port (35) that communicates with the crank chamber (6) at a position between the lug plate (9) and the swash plate (11).

3. The swash plate type compressor (1) according to any one of claims 1 and 2, wherein at least a part of the drive shaft (7; 207; 307) is made of heat insulation material.

4. The swash plate type compressor (1) according to claim 3, wherein the heat insulation material is resin.

5. The swash plate type compressor (1) according to any one of claims 1 through 4, wherein the drive shaft (7) includes a cylindrical hollow first shaft portion (7a) and a cylindrical hollow second shaft portion (7b) fitted in the first shaft portion (7a), the compressor further comprising a seal member (42) provided at an end portion of the second shaft portion (7b), wherein a part of the bleed passage (36) formed in the drive shaft (7) is defined by an inner peripheral surface of the first shaft portion (7a), an outer peripheral surface of the second shaft portion (7b) and the seal member (42), and wherein a part of the supply passage (25) formed in the drive shaft (7) is defined by an inner peripheral surface of the second shaft portion (7b) and the seal member (42).

6. The swash plate type compressor (1) according to claim 5, wherein the first shaft portion (7a) and the second shaft portion (7b) are formed coaxially with each other.

7. The swash plate type compressor (1) according to claim 5, wherein the second shaft portion (7b) is fitted to the first shaft portion (7a) so that an axis of the second shaft portion (7b) is offset from an axis of the first shaft portion (7a).

8. The swash plate type compressor (1) according to claim 7, wherein a part of the inner peripheral surface of the first shaft portion (7a) is in contact with a part of the outer peripheral surface of the second shaft portion (7b).

9. The swash plate type compressor (1) according to any one of claims 1 through 4, wherein the drive shaft (307) includes a cylindrical hollow first shaft portion (307a) and a cylindrical hollow second shaft portion (307b) fitted in the first shaft (307), wherein the second shaft portion (307b) has a flange(307d) formed at opposite ends thereof and extending radially outside, wherein an inner peripheral surface of the first shaft portion (307a) and the flanges (307d) cooperate to form a seal portion (307y), wherein the bleed passage (336) formed in the drive shaft (307) is defined by an inner peripheral surface of the first shaft portion (307a), an outer peripheral surface of the second shaft portion (307b) and the seal portion (307y), and wherein the supply passage formed in the drive shaft (307) is defined by an inner peripheral surface of the second shaft portion (307b) and the seal portion (307y).

10. The swash plate type compressor (1) according to any one of claims 1 through 4, wherein the drive shaft (7) includes a cylindrical hollow first shaft portion (7a) and a partition member (7c) which divides an interior of the first shaft portion (7a) into a part of the supply passage (25) and a part of the bleed passage (36).

11. The swash plate type compressor (1) according to any one of claims 1 through 10, wherein the heat-generating sliding portion (8) is a lip seal provided around the drive shaft (7; 207; 307) for sealing of the crank chamber (6) from an outside of the housing.

12. The swash plate type compressor (1) according to any one of claims 1 through 10, wherein the heat-generating sliding portion (8) is a thrust bearing (10) provided between the lug plate (9) and the housing.

13. The swash plate type compressor (1) according to any one of claims 1 through 10, wherein the heat-generating sliding portion (8) is a link (12) which tiltably couples the swash plate (11) to the lug plate (9).

14. The swash plate type compressor (1) according to any one of claims 1 through 13, wherein the supply passage further includes a second throttle portion between the first throttle portion (21) and the communication port (26a) of the supply passage which communicates with the crank chamber (6).

15. The swash plate type compressor (1) according to any one of claims 1 through 14, **characterized in that** a bearing (239) is provided in the housing for supporting the drive shaft (207), the bearing (239) having a communication hole (207c) that extends therethrough, and **in that** the communication hole (207c) is a part of the bleed passage (236).

16. The swash plate type compressor (1) according to any one of claims 1 through 4, wherein the drive shaft (7) is formed of a single member having a part of the supply passage (25) and a part of the bleed passage (36) formed side by side.

## Patentansprüche

1. Taumelscheibenkompressor (1), umfassend
ein Gehäuse mit eine Zylinderbohrung (16), einer Ansaugdruckzone, einer Auslassdruckzone und einer Kurbelkammer (6),
einer drehbar von dem Gehäuse gelagerten Antriebswelle (7; 207; 307),
einer an der Antriebswelle (7; 207; 307) befestigten Anschlagsplatte (9),
eine schwenkbar mit der Anschlagsplatte (9) verbundenen Taumelscheibe (11), und
einen mit der Taumelscheibe (11) verbundenen und in der Zylinderbohrung (16) hin- und herbewegbar aufgenommenen Kolben,
wobei Kühlmittel in der Auslassdruckzone durch einen Zuführkanal in die Kurbelkammer (6) eingeführt wird, während Kühlmittel in der Kurbelkammer (6) durch einen Ablaufkanal zur Ansaugdruckzone zur Steuerung des Drucks in der Kurbelkammer (6) abgezogen wird, wodurch der Neigungswinkel der Taumelscheibe (11) verändert wird,
einen Wärme erzeugenden, in der Kurbelkammer (6) vorgesehenen Gleitabschnitt (8), wobei
der Zuführkanal einer Verbindungsöffnung (26a) umfasst, die mit der Kurbelkammer (6) und einem ersten Drosselabschnitt zur Drosselung des Kühlmittels in Verbindung steht,
**dadurch gekennzeichnet, dass**
mindestens Teile des Zuführkanals (25) und des Ablaufkanals (36) in der Antriebswelle (7; 207; 307) ausgebildet sind, und dass
ein Teil des in der Antriebswelle (7; 207; 307) ausgebildeten Ablaufkanals (36; 236; 336) zwischen einem Teil des in der Antriebswelle (7; 207; 307) ausgebildeten Zuführkanals (25; 325) und einer äußeren Umfangsfläche der Antriebswelle (7; 207; 307) ausgebildet sind.

2. Taumelscheibenkompressor (1) nach Anspruch 1, wobei der Ablaufkanal eine Verbindungsöffnung (35) umfasst, die mit der Kurbelkammer (6) an einer Position zwischen der Anschlagsplatte (9) und der Taumelscheibe (11) in Verbindung steht.

3. Taumelscheibenkompressor (1) nach einem der Ansprüche 1 und 2, wobei mindestens ein Teil der Antriebswelle (7; 207; 307) aus einem Wärme isolierenden Material hergestellt ist.

4. Taumelscheibenkompressor (1) nach Anspruch 3, wobei das Wärme isolierende Material ein Kunstharz ist.

5. Taumelscheibenkompressor (1) nach einem der Ansprüche 1 bis 4, wobei die Antriebswelle (7) einen zylindrischen hohlen ersten Wellenabschnitt (7a) und einen zweiten, in den ersten Wellenabschnitt (7a) eingesetzten zylindrischen hohlen Wellenabschnitt (7b) umfasst, der Kompressor weiter ein an einem Endabschnitt des zweiten Wellenabschnitts (7b) vorgesehenes Dichtelement (42) umfasst, wobei ein Teil des in der Antriebswelle (7) ausgebildeten Ablaufkanals (36) durch eine innere Umfangsfläche des ersten Wellenabschnitts (7a) einer äußeren Umfangsfläche des zweiten Wellenabschnitts (7b) und das Dichtelement (42) gebildet wird, und wobei ein Teil des in der Antriebswelle (7) ausgebildeten Zuführkanals (25) durch eine innere Umfangsfläche des zweiten Wellenabschnitts (7b) und dem Dichtelement (42) gebildet wird.

6. Taumelscheibenkompressor (1) nach Anspruch 5, wobei der erste Wellenabschnitt (7a) und der zweite Wellenabschnitt (7b) koaxial zueinander ausgebildet sind.

7. Taumelscheibenkompressor (1) nach Anspruch 5, wobei der zweite Wellenabschnitt (7b) so in den ersten Wellenabschnitt (7a) eingesetzt ist, dass die Achse des zweiten Wellenabschnitts (7b) von einer Achse des ersten Wellenabschnitts (7a) versetzt ist.

8. Taumelscheibenkompressor (1) nach Anspruch 7, wobei ein Teil der inneren Umfangsfläche des ersten Wellenabschnitts (7a) mit einem Teil der äußeren Umfangsfläche des zweiten Wellenabschnitts (7b) in Berührung steht.

9. Taumelscheibenkompressor (1) nach einem der Ansprüche 1 bis 4, wobei die Antriebswelle (307) einen zylindrischen hohlen ersten Wellenabschnitt (307a) und einen in den ersten Wellenabschnitt (307a) eingesetzten zylindrischen hohlen zweiten Wellenabschnitt (7b) umfasst, wobei der zweite Wellenabschnitt (307b) einen an seinen gegenüberliegenden Enden ausgebildeten, sich radial nach außen erstreckenden Flansch (307d) aufweist, wobei eine innere Umfangsfläche des ersten Wellenabschnitts (307a) und die Flansche (307d) zur Ausbildung eines Dichtabschnitts (307y) zusammenwirken, wobei der in der Antriebswelle (307) ausgebildete Ablaufkanal (336) durch eine innere Umfangsfläche des ersten Wellenabschnitts (307a), einer äußeren Umfangsfläche des zweiten Wellenabschnitts (307b) und dem Dichtabschnitt (307y) gebildet wird, und wobei der in der Antriebswelle (307) ausgebildete Zuführkanal durch eine innere Umfangsfläche des zweiten Wellenabschnitts (307b) und den Dichtabschnitt (307y) gebildet wird.

10. Taumelscheibenkompressor (1) nach einem der Ansprüche 1 bis 4, wobei die Antriebswelle (7) einen zylindrischen hohlen ersten Wellenabschnitt (7a) und ein Trennteil (7c) umfasst, das einen Innenraum des ersten Wellenabschnitts (7a) in einen Teil des Zuführkanals (25) und einen Teil des Ablaufkanals (36) unterteilt.

11. Taumelscheibenkompressor (1) nach einem der Ansprüche 1 bis 10, wobei der Wärme erzeugende Gleitabschnitt (8) als eine rings um die Antriebswelle (7; 207; 307) vorgesehene Lippendichtung zur Abdichtung der Kurbelkammer (6) von einer Außenseite des Gehäuses ausgebildet ist.

12. Taumelscheibenkompressor (1) nach einem der Ansprüche 1 bis 10, wobei der Wärme erzeugende Gleitabschnitt (8) als ein zwischen der Anschlagsplatte (9) und dem Gehäuse angeordnetes Drucklager (10) ausgebildet ist.

13. Taumelscheibenkompressor (1) nach einem der Ansprüche 1 bis 10, wobei der Wärme erzeugende Gleitabschnitt (8) als ein die Taumelscheibe (11) und die Anschlagsplatte (9) schwenkbar verbindendes Gelenk (12) ausgebildet ist.

14. Taumelscheibenkompressor (1) nach einem der Ansprüche 1 bis 13, wobei der Zuführkanal weiter einen zwischen dem ersten Drosselabschnitt (21) und der Verbindungsöffnung (26a) des Zuführkanal angeordneten zweiten Drosselabschnitt umfasst, der mit der Kurbelkammer (6) in Verbindung steht.

15. Taumelscheibenkompressor (1) nach einem der Ansprüche 1 bis 14,
**dadurch gekennzeichnet, dass**
in dem Gehäuse zur Lagerung der Antriebswelle ein Lager (239) vorgesehen ist, das eine sich dadurch erstreckende Verbindungsöffnung (207c) aufweist, und dass die Verbindungsöffnung (207c) als ein Teil des Ablaufkanals (236) ausgebildet ist.

16. Taumelscheibenkompressor (1) nach einem der Ansprüche 1 bis 4, wobei die Antriebswelle (7) aus einem einzigen Teil ausgebildet ist, wobei Seite an Seite ein Teil des Zuführkanals (25) und ein Teil des Ablaufkanals (36) ausgebildet sind.

## Revendications

1. Compresseur du type à plateau oscillant (1) comprenant
un boîtier pourvu d'un alésage de cylindre (16), une région de pression d'aspiration, une région de pression de refoulement et un carter (6),
un arbre d'entraînement (7 ; 207 ; 307) supporté pour tourner par le boîtier,
un plateau d'assemblage (9) fixé sur l'arbre d'entraînement (7 ; 207 ; 307),
un plateau oscillant (11) couplé pour basculer au plateau d'assemblage (9), et
un piston (13) couplé au plateau oscillant (11) et logé pour effectuer un mouvement de va-et-vient dans l'alésage de cylindre (16), dans lequel le réfrigérant présent dans la région de pression de refoulement est introduit dans le carter (6), par l'intermédiaire d'un passage d'alimentation, alors que le réfrigérant présent dans le carter (6) est soutiré à l'extérieur de la région de pression d'aspiration, par l'intermédiaire d'un passage d'évacuation, afin de commander la pression dans le carter (6), grâce à quoi l'angle d'inclinaison du plateau oscillant (11) est changé,
une portion coulissante génératrice de chaleur (8) fournie dans le carter (6), dans laquelle
le passage d'alimentation inclut un orifice de communication (26a) qui communique avec le carter (6) et une première portion de régulateur pour réguler le réfrigérant, **caractérisé en ce que**
au moins des parties du passage d'alimentation (25) et du passage d'évacuation (36) sont formées dans l'arbre d'entraînement (7 ; 207 ; 307), et **en ce que**
une partie du passage d'évacuation (36 ; 236 ; 336) formée dans l'arbre d'entraînement (7 ; 207 ; 307) est située entre une partie du passage d'alimentation (25 ; 325) formée dans l'arbre d'entraînement (7 ; 207 ; 307) et une surface périphérique extérieure de l'arbre d'entraînement (7 ; 207; 307).

2. Compresseur du type à plateau oscillant (1) selon la revendication 1, dans lequel le passage d'évacuation inclut un orifice de communication (35) qui communique avec le carter (6) dans une position située entre le plateau d'assemblage (9) et le plateau oscillant (11).

3. Compresseur du type à plateau oscillant (1) selon l'une quelconque des revendications 1 et 2, dans lequel au moins une partie de l'arbre d'entraînement (7 ; 207 ; 307) est composée d'un matériau d'isolation thermique.

4. Compresseur du type à plateau oscillant (1) selon la revendication 3, dans lequel le matériau d'isolation thermique est de la résine.

5. Compresseur du type à plateau oscillant (1) selon l'une quelconque des revendications 1 à 4, dans lequel l'arbre d'entraînement (7) inclut une première portion d'arbre creuse cylindrique (7a) et une seconde portion d'arbre creuse cylindrique (7b) installée dans la première portion d'arbre (7a), le compresseur comprenant en outre un élément de joint (42) fourni au niveau d'une portion d'extrémité de la seconde portion d'arbre (7b), dans laquelle une partie du passage d'évacuation (36) formée dans l'arbre d'entraînement (7) est définie par une surface périphérique intérieure de la première portion d'arbre (7a), une surface périphérique extérieure de la seconde portion d'arbre (7b) et l'élément de joint (42), et dans laquelle une partie du passage d'évacuation (25) formée dans l'arbre d'entraînement (7) est définie par une surface périphérique intérieure de la seconde portion d'arbre (7b) et l'élément de joint (42).

6. Compresseur du type à plateau oscillant (1) selon la revendication 5, dans lequel la première portion d'arbre (7a) et la seconde portion d'arbre (7b) sont formées coaxialement l'une par rapport à l'autre.

7. Compresseur du type à plateau oscillant (1) selon la revendication 5, dans lequel la seconde portion d'arbre (7b) est installée sur la première portion d'arbre (7a), de telle sorte qu'un axe de la seconde portion d'arbre (7b) est décalé par rapport à un axe de la première portion d'arbre (7a).

8. Compresseur du type à plateau oscillant (1) selon la revendication 7, dans lequel une partie de la surface périphérique intérieure de la première portion d'arbre (7a) est en contact avec une partie de la surface périphérique extérieure de la seconde portion d'arbre (7b).

9. Compresseur du type à plateau oscillant (1) selon l'une quelconque des revendications 1 à 4, dans lequel l'arbre d'entraînement (307) inclut une première portion d'arbre creuse cylindrique (307a) et une seconde portion d'arbre creuse cylindrique (307b) installée dans la première portion d'arbre (307), dans laquelle la seconde portion d'arbre (307b) est pourvue d'une bride (307d) formée au niveau des extrémités opposées de celle-ci et s'étendant radialement vers l'extérieur, dans lequel une surface périphérique intérieure de la première portion d'arbre (307a) et les brides (307d) coopèrent pour former une portion de joint (307y), dans lequel le passage d'évacuation (336) formé dans l'arbre d'entraînement (307) est défini par une surface périphérique intérieure de la première portion d'arbre (307a), une surface périphérique extérieure de la seconde portion d'arbre (307b) et la portion de joint (307y), et dans lequel le passage d'alimentation formé dans l'arbre d'entraînement (307) est défini par une surface périphérique intérieure de la seconde portion d'arbre (307b) et la portion de joint (307y).

10. Compresseur du type à plateau oscillant (1) selon l'une quelconque des revendications 1 à 4, dans lequel l'arbre d'entraînement (7) inclut une première portion d'arbre creuse cylindrique (7a) et un élément de séparation (7c) qui divise l'intérieur de la première portion d'arbre (7a) en une partie de passage d'alimentation (25) et une partie de passage d'évacuation (36).

11. Compresseur du type à plateau oscillant (1) selon l'une quelconque des revendications 1 à 10, dans lequel la portion coulissante génératrice de chaleur (8) est un joint à lèvres fourni autour de l'arbre d'entraînement (7 ; 207 ; 307), afin de fermer hermétiquement le carter (6) par rapport à l'extérieur du boîtier.

12. Compresseur du type à plateau oscillant (1) selon l'une quelconque des revendications 1 à 10, dans lequel la portion coulissante génératrice de chaleur (8) est un palier de butée (10) fourni entre le plateau d'assemblage (9) et le boîtier.

13. Compresseur du type à plateau oscillant (1) selon l'une quelconque des revendications 1 à 10, dans lequel la portion coulissante génératrice de chaleur (8) est une biellette (12) qui couple, pour pouvoir basculer, le plateau oscillant (11) au plateau d'assemblage (9).

14. Compresseur du type à plateau oscillant (1) selon l'une quelconque des revendications 1 à 13, dans lequel le passage d'alimentation inclut en outre une seconde portion de régulateur située entre la première portion de régulateur (21) et l'orifice de communication (26a) du passage d'alimentation qui communique avec le carter (6).

15. Compresseur du type à plateau oscillant (1) selon l'une quelconque des revendications 1 à 14, **caractérisé en ce qu'**un palier (239) est fourni dans le boîtier, afin de supporter l'arbre d'entraînement (207), le palier (239) ayant un trou de communication (207c) qui s'étend à travers celui-ci, et **en ce que** le trou de communication (207c) est une partie du passage d'évacuation (236).

16. Compresseur du type à plateau oscillant (1) selon l'une quelconque des revendications 1 à 4, dans lequel l'arbre d'entraînement (7) est composé d'un seul élément ayant une partie du passage d'alimentation (25) et une partie du passage d'évacuation (36) formées côte à côte.
